## Europäisches Patentamt

## European Patent Office

## Office européen des brevets

(19)

(11) Veröffentlichungsnummer: **0 083 033 B1**

(12) **EUROPÄISCHE PATENTSCHRIFT**

(45) Veröffentlichungstag der Patentschrift:
23.04.86

(51) Int. Cl.⁴: **A 01 B 71/06, F 16 D 1/10**

(21) Anmeldenummer: **82111672.0**

(22) Anmeldetag: **16.12.82**

(54) **Zapfwellenkupplung.**

(30) Priorität: 24.12.81 DE 3151321
24.12.81 DE 8137708 U

(43) Veröffentlichungstag der Anmeldung:
06.07.83 Patentblatt 83/27

(45) Bekanntmachung des Hinweises auf die Patenterteilung:
23.04.86 Patentblatt 86/17

(84) Benannte Vertragsstaaten:
AT BE CH DE FR GB IT LI LU NL SE

(56) Entgegenhaltungen:
FR - A - 1 433 193
FR - A - 1 516 941
FR - A - 2 201 657
FR - A - 2 304 268
FR - A - 2 322 297
GB - A - 798 946
US - A - 2 636 568

POWER FARMING, Band 61, Nr. 7, Juli 1982, Sutton,
Surrey, G.B. Seite 42

(73) Patentinhaber: **Conrad, Ernst, Im Westfeld 13,
D-3101 Nienhagen (DE)**

(72) Erfinder: **Conrad, Ernst, Im Westfeld 13,
D-3101 Nienhagen (DE)**

(74) Vertreter: **Junius, Walther, Dr., Wolfstrasse 24,
D-3000 Hannover 81 (DE)**

## Beschreibung

Die Erfindung betrifft eine Zapfwellenkupplung zur Verbindung der Antriebswelle eines Geräts mit der Zapfwelle eines Motorfahrzeugs, insbesondere eines landwirtschaftlichen Schleppers, bestehend aus zwei ineinandergreifenden Kupplungsgliedern, von denen das eine am Ende der Zapfwelle in einem ein Zapfwellenlager enthaltenden rahmen- oder plattenförmigen, mit dem Zugfahrzeug verbundenen Gehäuseteil angeordnet ist und das andere am Ende der das Gerät antreibenden Welle, auf der zum Motorfahrzeug hin gerichteten Seite eines ein Wellenlager enthaltenden, plattenförmigen Schildes angeordnet ist, wobei der rahmen- oder plattenförmige Gehäuseteil und das Schild in den gegenseitigen Eingriff bringbare Befestigungs- und/oder Zentriermittel aufweisen, welche Befestigungsmittel mindestens einen oberhalb der Welle und der Zapfwelle liegenden schwenkbaren Haken umfassen.

Es ist allgemein üblich, dass über das genutete oder verzahnte Ende der Zapfwelle eine mit einer Innenverzahnung oder -vernutung versehene Hülse aufgeschoben wird, die über ein Gelenk mit der Antriebswelle des Gerätes verbunden ist. Diese Hülse weist vor ihrem vorderen Ende einen radial beweglichen Zapfen auf, der mit der Kraft einer Feder in Achsrichtung gedrückt wird. Dieser Zapfen greift dann, wenn die Hülse voll über das Zapfwellenende geschoben ist, in die Ringnut ein und sichert auf diese Weise einen unverrückbaren Sitz der Hülse auf dem Zapfwellenende. Diese allgemein übliche Ankupplung der Antriebswelle an das Zapfwellenende hat den Nachteil, dass das Ankuppeln der Antriebswelle an die Zapfwelle ein schwieriger Arbeitsvorgang ist, sowie den Nachteil der Unfallgefährlichkeit.

Versuche, eine Kupplung für die leichtere und gefahrlosere Ankopplung der Antriebswelle an die Zapfwelle zu schaffen, sind gescheitert, weil sie zu zu aufwendigen und zu komplizierten Konstruktionen führten, das Gewicht der Antriebswelle erheblich erhöhten und letztlich doch nicht die gewünschte Erleichterung beim Ankoppeln und die gewünschte Sicherheit gegen Unfälle brachten.

So ist durch die US-A-30 74 501 eine Zapfwellenkupplung bekannt geworden, bei der an der Dreipunktaufhängung des Schleppers ein dreieckförmiger Rahmen angebracht ist, der mit einem entsprechenden dreieckförmigen Rahmen am Arbeitsgerät zu verbinden ist. Dieser dreieckförmige Rahmen am Arbeitsgerät trägt ein Schild, in welchem die eine Kupplungshälfte drehbar gelagert ist. Nachteil dieser Bauart ist es, dass zwischen der Zapfwelle des Schleppers und dem dreieckförmigen Rahmen an der Dreipunktaufhängung eine Gelenkwelle angeordnet werden muss, was den Aufbau kompliziert und das Ankuppeln schwierig macht, weil der eine Rahmen den anderen einfangen muss und hierzu die Dreipunkthydraulik betätigt werden muss. Dieser Nachteil tritt auch bei anderen Zapfwellenkupplungen, wie z.B. der der US-A-28 69 660, bei der zur Unfallsicherung das eine Kupplungsglied mit einem es umgebenden Trichter versehen ist, und der DE-C-12 15 419 auf, bei der ebenfalls zwei dreieckige Rahmen dem Ankuppelvorgang dienen.

Bei der DE-C-22 41 434 ist das Arbeitsgerät an einem Schild angehängt, welches durch besondere Fanghaken, die mit einem Kraftheber betätigt werden, eingefangen und angekoppelt wird. In diesem Schild ist eine Kupplungshälfte angebracht, die mit einer anderen Kupplungshälfte, die auf die Zapfwelle aufgesetzt ist, zusammenrastet, wenn das Schild angehängt wird. In ähnlicher Weise ist bei der FR-A-22 01 657 an dem Schild die Anhängekupplung für ein anzuhängendes Arbeitsgerät angebracht. Das Einfangen und Anhängen mit Hilfe des Krafthebers macht Geräte notwendig, die nicht mit genormten Dreipunktanhängevorrichtungen anzuhängen sind. Es sind vielmehr Arbeitsgeräte notwendig, die nicht mit der üblichen genormten Dreipunktanhängevorrichtung anzuhängen sind.

Eine weitere Möglichkeit einer Zapfwellenkupplung ist in der FR-A-23 22 297 gezeigt, wo an einer Buchse eine von Hand zu betätigende lange Stange angeordnet ist, mit der die die eine Kupplungshälfte aufnehmende Buchse mit einem an ihr angebrachten Widerlager in einem Haken am Schlepper einzuhängen ist. Hier ist jedoch der Einkuppelvorgang mit Schwierigkeiten verbunden.

Für derartig komplizierte Vorrichtungen besteht jedoch kein Bedürfnis. Ein wirkliches Bedürfnis besteht nach einer einfach aufgebauten Zapfwellenkupplung, mit der die anzukuppelnde Welle mit einem einfachen Handgriff an die Zapfwelle anzukoppeln und mit einem ebenso einfachen Handgriff auch wieder abzukoppeln ist, ohne dass hierbei Unfallgefahr besteht. Dabei soll es gleichgültig sein, ob das Arbeitsgerät als Anhänger an den Schlepper anzuhängen ist oder mit Hilfe der genormten Dreipunktanhängevorrichtung vom Schlepper selbst getragen wird.

Es ist die Aufgabe der Erfindung, eine einfach aufgebaute, leicht zu handhabende Schnellkupplung hoher Betriebssicherheit zu schaffen, mit der die Antriebswelle eines Gerätes mit der Zapfwelle eines Motorfahrzeuges unfallfrei zu verbinden ist.

Die Erfindung besteht darin, dass das Schild am oberen Ende mit einem Handgriff versehen ist, dass an den unteren Enden des Schildes und des rahmen- oder plattenförmigen Gehäuseteils Zentrier- und Befestigungsmittel angeordnet sind, die durch eine vertikale Bewegungskomponente miteinander in Eingriff bringbar sind und die im Eingriff miteinander ein Schwenklager bilden, um den das Schild mit dem anderen Kupplungsteil zwischen einer ausgekuppelten Stellung, in der der/die schwenkbaren Haken ausser Eingriff stehen, und einer eingekuppelten Stellung, in der der/die schwenkbaren Haken in Eingriff stehen, schwenkbar ist, dass das eine Kupplungsglied ein mit radial vorstehenden Mitnehmerfingern versehenes Rad und das andere Kupplungsglied ein mit achsparallel angeordneten, über die Stirnseite vorstehenden Mitnehmerklauen versehenes Rad ist, und dass die rückwärtigen Flächen der radialen Mitnehmerfinger des einen Kupplungsgliedes und ebenfalls die rückwärtigen Flächen der Mitnehmerklauen des anderen Kupplungsgliedes mit schrägen Anlaufflächen versehen sind.

Eine derartige Kupplung zeichnet sich dadurch aus, dass sie nicht nur schnell ankoppelbar ist, sondern auch abzukoppeln ist, ohne dass die Hände einer Bedienungsperson in unmittelbarer Nähe der Kupplungsglieder befindlich sind. Denn beim Ankuppeln können die Hände der Bedienungsperson entweder am Schild selbst angreifen oder an einer die Antriebswelle umgebenden starren Hülse. Hierdurch ist gesichert, dass Unfälle im Bereich der Zapfwelle beim Ankoppeln nicht mehr erfolgen und dass der Ankoppelvorgang besonders schnell und einfach ausgeführt werden kann.

Besonders vorteilhafte Ausführungsformen dieser Erfindung sind in den Unteransprüchen gekennzeichnet.

Das Wesen der Erfindung ist nachstehend anhand von in der Zeichnung schematisch dargestellten Ausführungsbeispielen näher erläutert. Es zeigen:

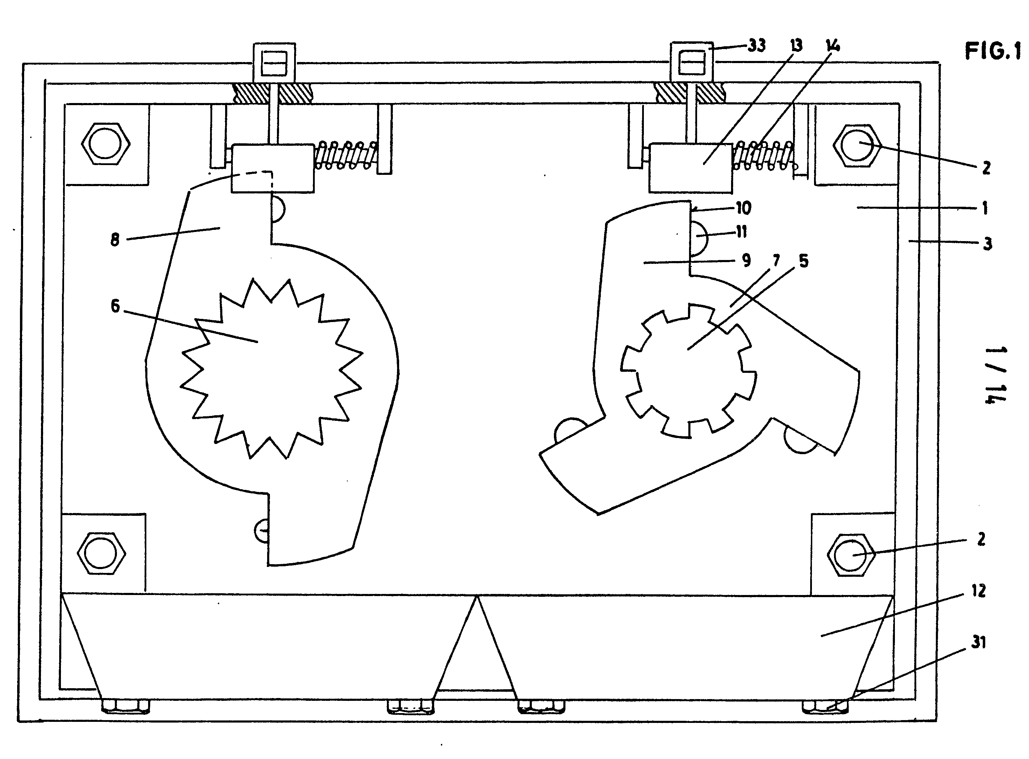

Fig. 1 eine Ansicht von hinten auf den Zapfwellengetriebekasten mit dem auf diesen aufgebauten Rahmen ohne verschiebbare Wände,

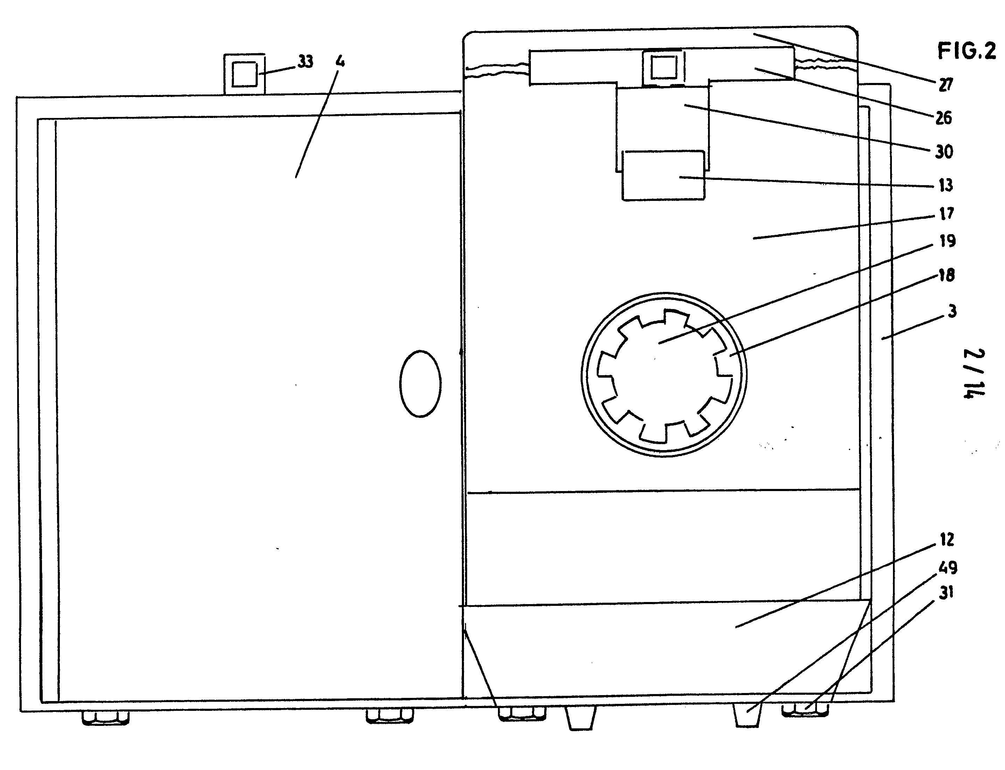

Fig. 2 eine Ansicht von hinten auf den Rahmen mit eingesetztem Schild und beiseite geschobener verschiebbarer Wand,

Fig. 3 einen Schnitt durch die eingekuppelte Zapfwellenkupplung,

Fig. 4 einen Schnitt durch die Zapfwellenkupplung vor dem Einkupplungs- bzw. nach dem Abkupplungsvorgang,

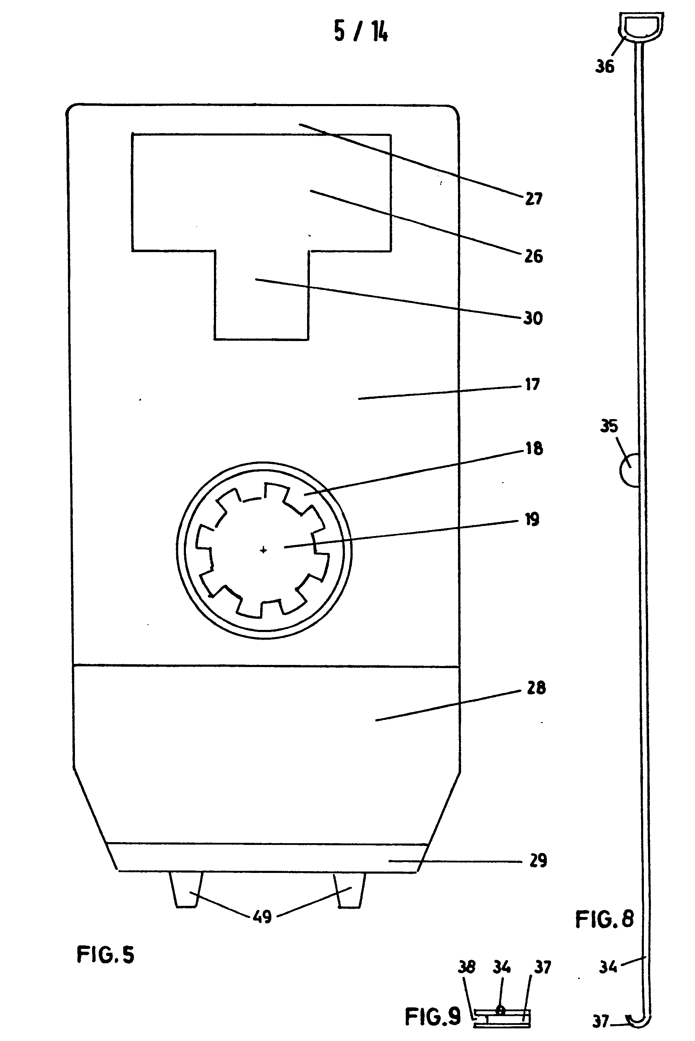

Fig. 5 eine Ansicht des Schildes von der Wellenstumpfseite,

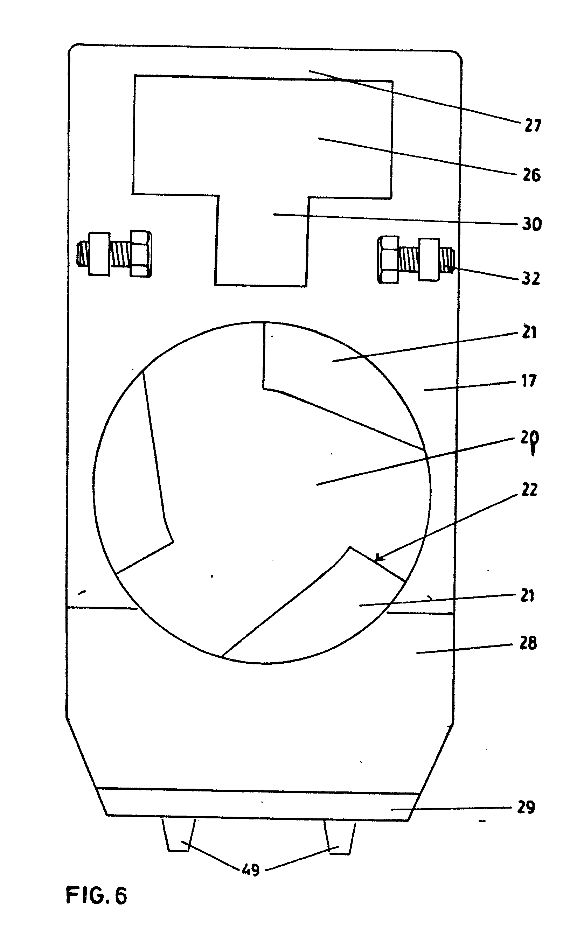

Fig. 6 eine Ansicht des Schildes von der Kuppelgliedseite,

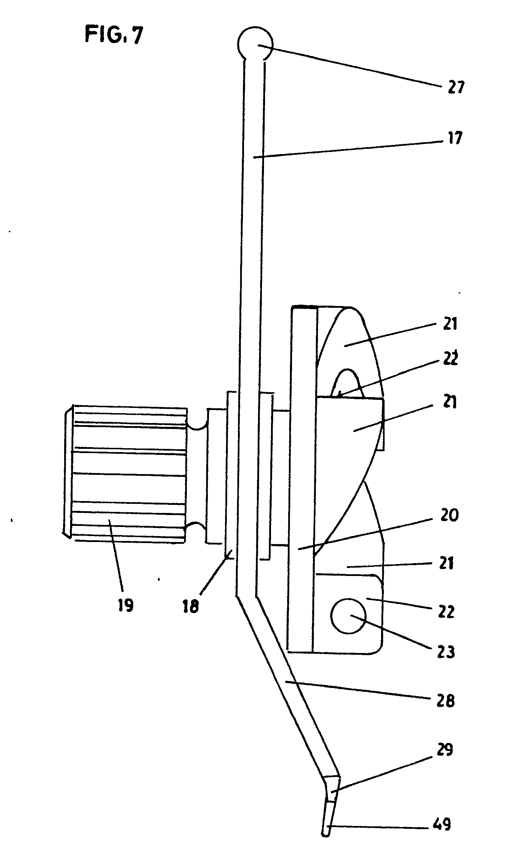

Fig. 7 eine Seitenansicht des Schildes mit Kupplungsteil und Wellenstumpf,

Fig. 8 eine Ansicht eines Betätigungsstabes,

Fig. 9 eine Ansicht des Hakens des Betätigungsstabes,

Fig. 10 einen Schnitt durch ein anderes Kuppelglied,

Fig. 11 eine Ansicht dieses Kuppelgliedes,

Fig. 12 eine Seitenansicht einer anderen Ausführungsform der Zapfwellenkupplung,

Fig. 13 eine Ansicht des Kupplungsgliedes mit Mitnehmerfingern,

Fig. 14 eine Ansicht des Kupplungsgliedes mit Mitnehmerklauen,

Fig. 15 eine Ansicht auf die Zapfwellenkupplung von hinten,

Fig. 16 eine Seitenansicht einer weiteren Zapfwellenkupplung,

Fig. 17 eine Ansicht von hinten auf diese Zapfwellenkupplung,

Fig. 18 eine Ansicht von hinten auf eine weitere Ausführungsform dieser Zapfwellenkupplung.

An dem Gehäuse 1 des Zapfwellengetriebes eines landwirtschaftlichen Schleppers ist mittels Schrauben 2 ein Rahmen 3 angebracht, der durch verschiebbare Wände bzw. verschiebbare Türen 4 nach aussen abschliessbar ist. In diesen Rahmen hinein ragt aus dem Getriebekasten 1 eine Zapfwelle 5 und evtl. noch eine weitere Zapfwelle 6. Auf diese Zapfwellen ist jeweils ein Kupplungsglied 7 bzw. 8 aufgesetzt. Das Kuppelglied 7 ist radförmig gestaltet, weist eine Zentralbohrung auf, deren Innenfläche entsprechend den Nuten auf der Aussenfläche der Zapfwelle 5 mit Vorsprüngen versehen ist und drei radial nach aussen gerichtete Mitnehmerfinger 9 trägt. Diese Mitnehmerfinger 9 weisen eine Mitnehmerfläche 10 auf, aus der für die Zentrierung eine Kugelfläche 11 oder ein Kegelzapfen heraussteht. Diese Kugelfläche kann durch eine in eine Bohrung eingesetzte und mit einem Stift oder einem eingeschraubten Ring gehaltene Kugel bestehen. Die andere Zapfwelle trägt ein ähnliches Kupplungsglied 8, welches jedoch eine andere Zahl (zwei, vier oder mehr) Mitnehmerfinger besitzt. Unterhalb jeder Zapfwelle ist ein Trichter 12 als Fangtrog angeordnet. Oberhalb jeder Zapfwelle befindet sich ein um eine horizontal liegende Welle verschwenkbarer Haken 13, der unter der Kraft einer Feder 14 gegen einen Anschlag 15 gedrückt wird. Dieser Anschlag 15 ist so angeordnet, dass der Haken sich in einer Stellung befindet, in der er mittels seiner Anlaufkante 16 von dem Schild 17 beim Einsetzen und Einkoppeln angehoben werden kann und, sobald das Schild 17 die Einkuppelstellung erreicht hat, hinter das Schild 17 greift und dieses in der Einkuppelstellung festhält.

Der Trichter 12 weist nicht nur zwei schräg gestellte Seitenwände auf, sondern auch eine schräg gestellte Vorderwand. Dieser Trichter 12 dient zum Einführen und Zentrieren der Unterkante des Schildes 17.

Das Schild 17 trägt in einem Lager 18 einen Wellenstumpf 19, der auf der dem Zapfwellengetriebe 1 abgewandten Seite eine Reihe von Nuten oder eine Verzahnung trägt, die zweckmässigerweise in der gleichen Weise wie die Zapfwellenverzahnung ausgebildet ist. Es ist auch möglich, dass der Wellenstumpf 19 ein Teil des nachfolgenden Kreuzgelenkes der angetriebenen Maschine ist. Auf der anderen, dem Zapfwellengetriebe 1 zugewandten Seite trägt er das zweite Kupplungsglied 20. Dieses Kupplungsglied 20 besteht aus einem Rad, an dessen Stirnseite in der Nähe des Umfanges Mitnehmerklauen 21 angeordnet sind, die auf derjenigen Seite 22, die an den Mitnehmerfingern 9 anliegt, eine eingearbeitete Kugelpfanne 23 aufweist, in die nach dem Einkuppeln die Kugel 11 des Mitnehmerfingers 9 eingreift. Diese Kugeln — man kann auch Kegelstümpfe verwenden — sorgen für eine ausgezeichnete Zentrierung und gewährleisten eine verschleiss- und reibungsfreie Kraftübertragung.

Über den Wellenstumpf 19 wird die Hülse 24 der Antriebswelle 25 für das anzutreibende Gerät herübergeschoben und befestigt. Teil 19, 24, 25 können aber auch ein einziges Teil sein, welches mit der Antriebswelle des Gerätes verbunden ist, das Ende der Antriebswelle selbst ist oder an dem Kreuzgelenk der Antriebswelle angebracht ist.

Das Schild 17 weist in seinem oberen Teil, der über den Rahmen 3 hinaussteht, ein Handgriffloch 26 auf, so dass als oberes Ende des Schildes 17 ein Handgriff 27 entsteht. An diesem wird das Schild getragen und in den Trichter 12 eingesetzt.

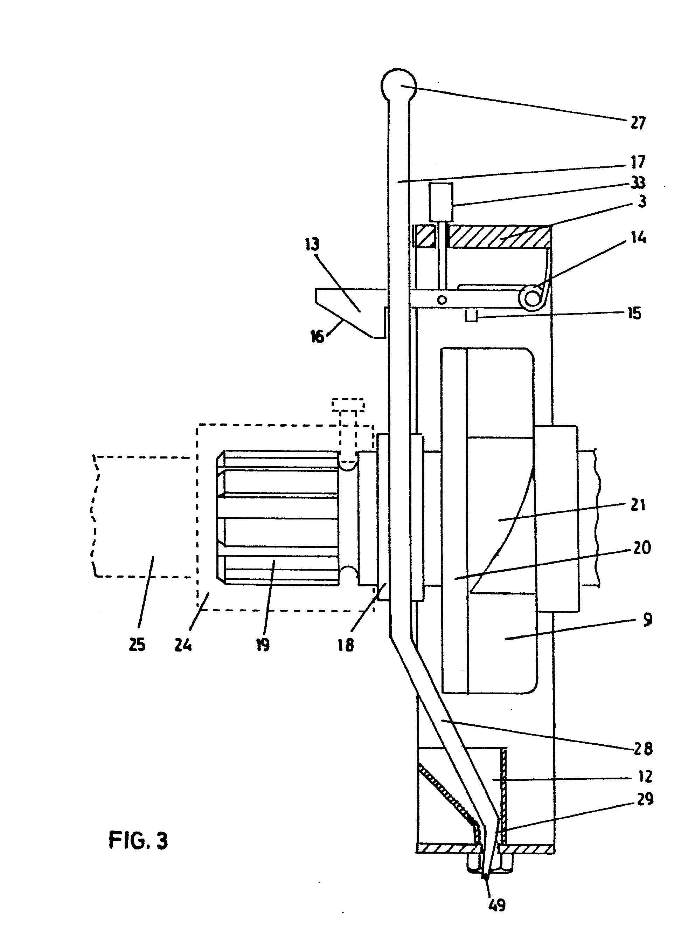

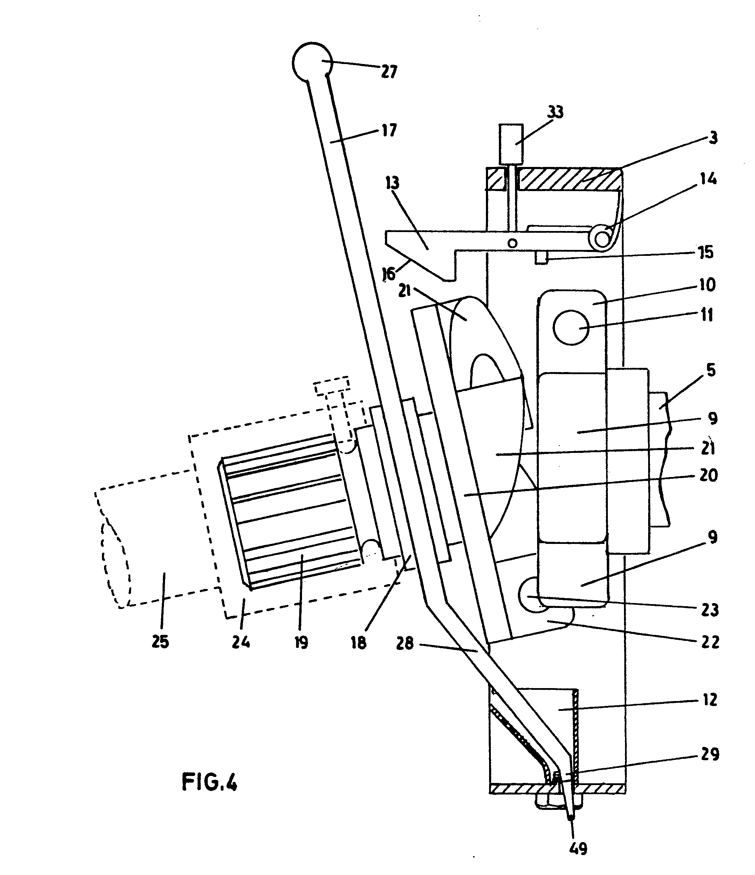

Um das Schild 17 in den Trichter 12 gut einsetzen zu können, ist das Schild 17 zweimal gekröpft, wobei am oberen und am unteren Ende des Schildes parallel zueinander verlaufende Flächen entstehen, die durch eine Schrägfläche 28 unterbrochen sind. Der Neigungswinkel dieser Schrägfläche wird so gewählt, dass bei Anlage der Schrägfläche 28 an der Wand des Trichters 12, wie es in Fig. 4 dargestellt ist, das Schild 17 nicht vertikal steht. In der vertikalen Stellung des Schildes 017 (Fig. 3) ist die Fläche 28 weniger stark gegen die Vertikale geneigt als die Wand des Trichters 12.

Das untere Ende des Schildes 17 läuft – zur weiteren besseren Zentrierung, das ist aber nicht unbedingt notwendig – entweder in zwei Zentrierzapfen 49 und/oder einen länglichen Zentrierdorn 29 aus, die durch Löcher im Boden des Trichters 12 zentriert werden. Diese Zentrierzapfen oder der Zentrierdorn sind konisch oder pyramidenstumpfförmig ausgebildet. Auf diese Weise wird die Unterseite des Schildes 17 zentriert.

Die Oberseite des Schildes 17 wird durch den Haken 13 zentriert, der in eine für sein Eingreifen vorgesehene Ausnehmung 30 einfällt, sobald das Schild aus der Stellung der Fig. 4 in die Stellung der Fig. 3 gedrückt wird. Die Seitenkanten der Ausnehmung 30 bewirken dabei die Zentrierung nach den Seiten hin, während die Feder 14 einen Teil der Zentrierkraft in vertikaler Richtung übernimmt. Der andere Teil der Zentrierkraft ist durch die Schwerkraft bewirkt, die auf das Schild und die angeschlossene Antriebswelle wirkt. Eine Feinzentrierung kann mit Einstellschrauben 31 am Boden des Trichters bewirkt werden, die vertikal verstellbar sind, sowie durch Einstellschrauben 32, die horizontal verstellbar sind.

Der Haken 13 weist eine durch den Rahmen 3 hindurchtretende Handhabe 33 auf. Mit dieser Handhabe kann der Haken 13 angehoben werden, so dass beim Abkoppelvorgang das Schild 17 aus der Stellung der Fig. 3 in die Stellung der Fig. 4 fällt.

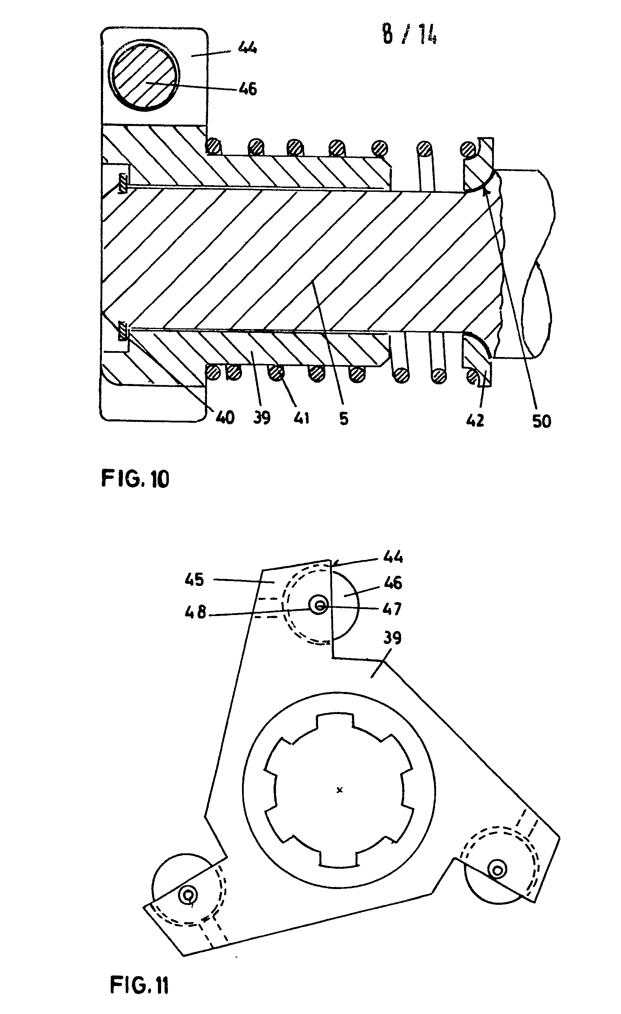

Die Tätigkeiten des Abkoppelns und Ankoppelns können vom Schleppersitz ausgeführt werden, wenn hierzu ein Stab benutzt wird, wie er in Fig. 8 und Fig. 9 dargestellt ist. Dieser Stab 34 weist in der Mitte ein feststellbares Gelenk 35 auf, um ihn zusammenklappbar zu machen. Am einen Ende weist der Stab 34 einen Handgriff 36, am anderen Ende einen Haken 37 auf. Dieser Haken 37 hat die Form eines halben Rohres, welches an der einen Stirnseite eine Ausnehmung 38 aufweist. Dieser Haken 37 wird benutzt, um am Handgriff 27 anzugreifen. Die Ausnehmung 38 kann dabei an die Seitenflächen des Handgrifflloches 26 angreifen, kann aber auch an die Handhabe 33 angreifen.

Das Einkuppeln mit dieser Vorrichtung wird so vorgenommen, dass das am Ende einer Antriebswelle befestigte Schild 17 mit seiner Unterseite in den Trichter 12 eingesetzt wird, wie es Fig. 4 zeigt. Dazu dient der Handgriff 27. Die doppelte Kröpfung bewirkt, dass die Unterkante des Schildes 17 mit dem Zentrierdorn 19 bereits in den Trichter 12 eingesetzt werden kann, wenn sich die beiden Kupplungsteile noch weit entfernt voneinander befinden. Hat man den Zentrierdorn 29 über die Oberkante des Trichters 12 herübergesetzt, kann man den Handgriff 27 einfach loslassen und das Schild 17 rutscht mit Sicherheit in die in Fig. 4 dargestellte Stellung hinein. Dann braucht nur noch das Schild in die in Fig. 3 gezeigte Stellung verschwenkt zu werden, was durch einfaches Drücken am Handgriff 27 möglich ist. Hierbei greifen die Kupplungsteile ineinander und gelangen so in die eingekuppelte Stellung. Der federbelastete Haken 13 wird hierbei durch seine Anlaufkante 16 hochgehoben und fällt mit seiner Haltenase hinter das Schild 17, sobald dieses die vertikale Stellung bzw. die Einkuppelstellung erreicht hat.

Zum Entkuppeln braucht man nur an der Handhabe 33 anzufassen und nach oben zu ziehen, so dass der Haken 13 entgegen der Kraft der Feder 14 verschwenkt wird. Dadurch fällt das Schild 17 aus seiner in Fig. 3 gezeigten Stellung in die in Fig. 4 gezeigte Stellung. Dabei erfolgt das Entkoppeln der beiden Kupplungsglieder. Hierauf wird das Schild an dem Handgriff 27 hochgehoben und dann das Schild beiseitegesetzt. Alle diese Arbeitsvorgänge verlaufen ohne jegliche Unfallgefahr, weil sich die Hände der Bedienungsperson weitab von der Zapfwelle und den sich drehenden Kupplungsteilen befinden.

Das in Fig. 10 dargestellte Kuppelglied 39 ist verschiebbar auf der Zapfwelle 5 angeordnet, die an ihrem Ende einen Begrenzer für die Verschiebung des Kuppelgliedes 39 in Form eines federnden Sicherungsringes 40 trägt, der in eine Nut am Zapfwellenende gelagert ist. Das Kuppelglied 39 stellt unter der Kraft einer Feder 41, die sich gegen den Federteller 42 abstützt, der seinerseits gegen einen Absatz 50 auf der Zapfwelle 5 gedrückt ist.

In halbkugelförmige Ausnehmungen der Mitnahmeflächen 44 der Mitnehmerfinger 45 sind Kugeln 46 eingesetzt, die Zapfen 47 tragen, die mit Spiel in achsparallelen Bohrungen 48 in den Mitnehmerfingern 45 gelagert sind. Diese Zapfen verhindern ein Herausfallen der Kugeln. Die Feder 41 erleichtert ein Einkuppeln, indem sie ein Zurückschieben des Kupplungsgliedes 39 beim Einkuppeln ermöglicht. Das zurückgeschobene Kupplungsglied 39 springt bei drehender Zapfwelle sofort in die Kuppelstellung, sobald die Mitnehmerklauen des anderen Kupplungsgliedes dieses zulassen.

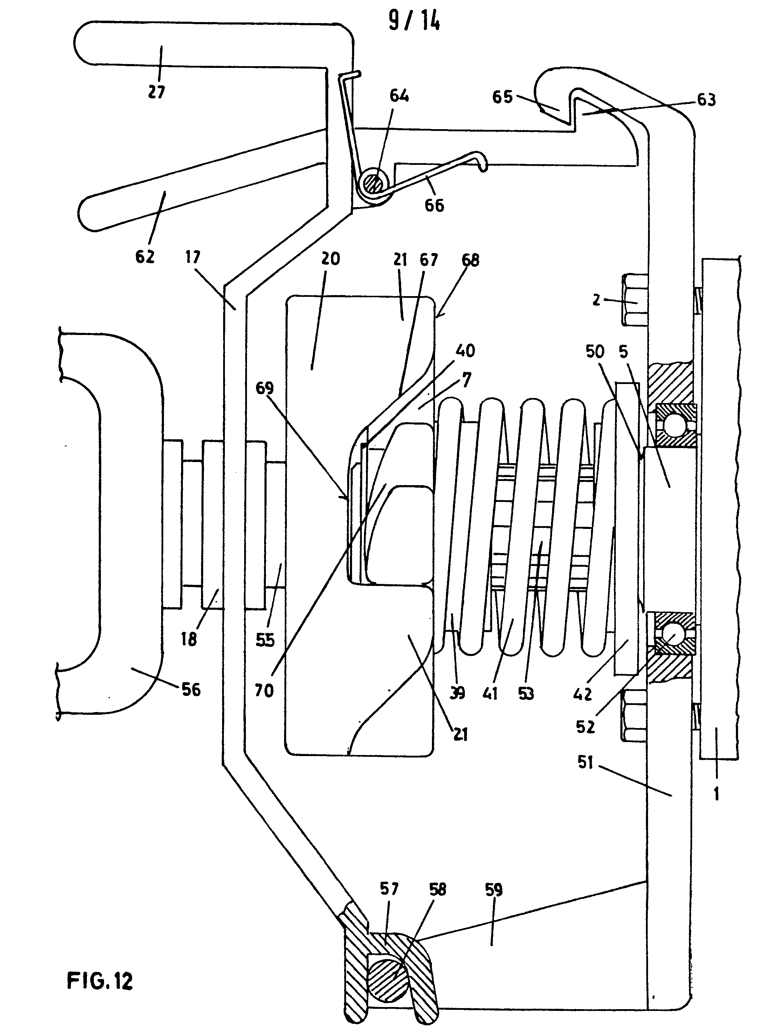

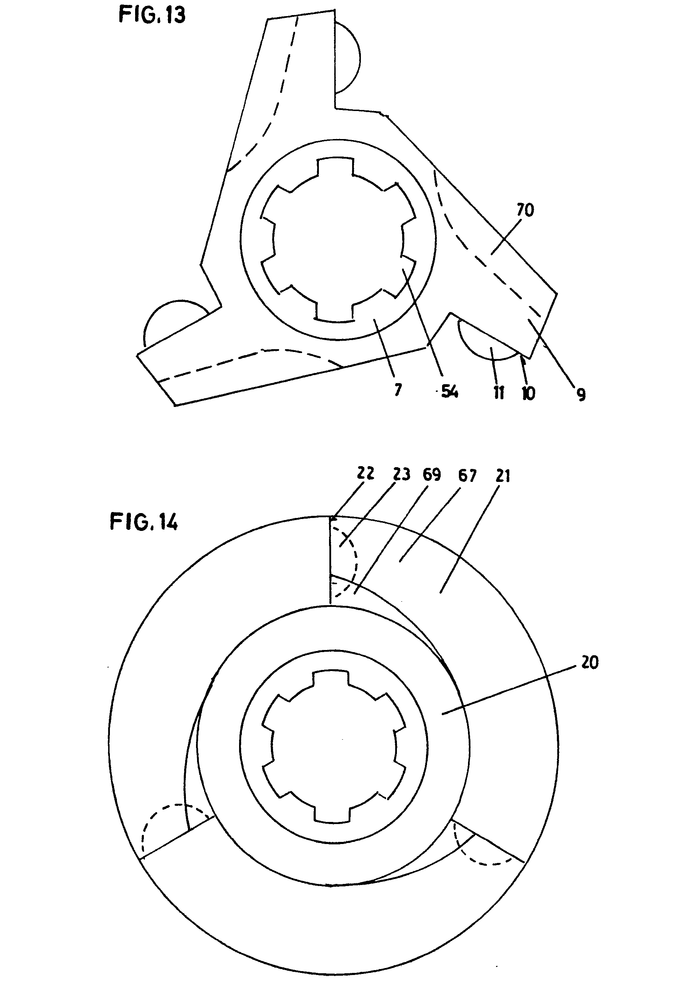

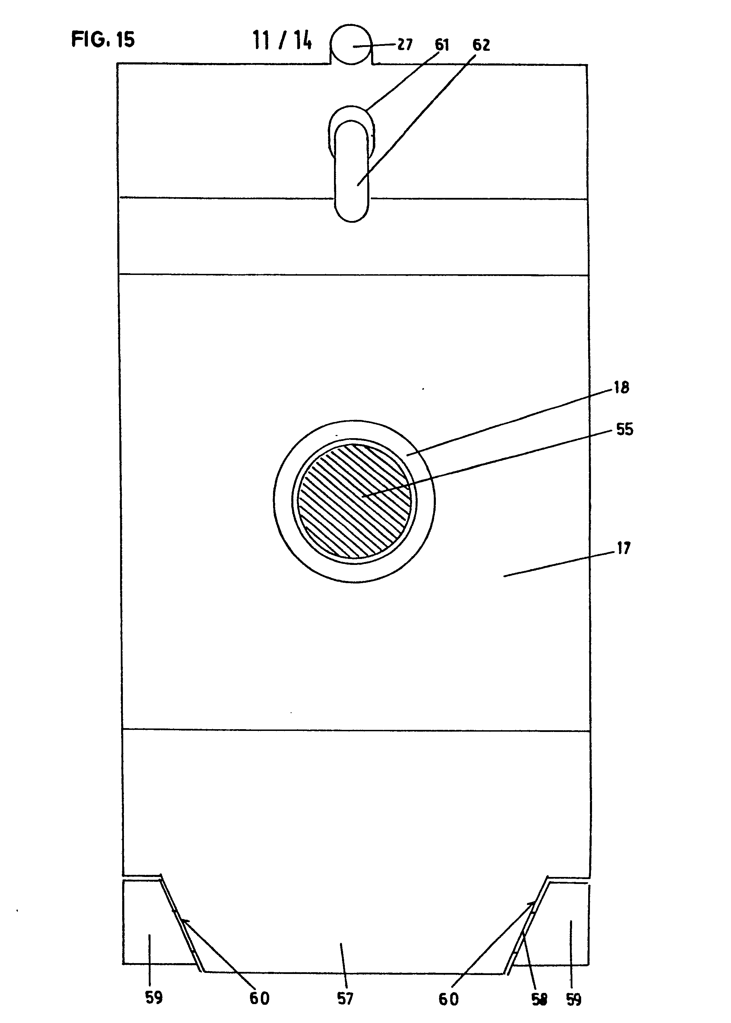

In den Fig. 12 bis 18 ist ein anderes Ausführungsbeispiel dargestellt:

An dem Gehäuse 1 des Zapfwellengetriebes eines landwirtschaftlichen Schleppers ist mittels Schrauben 2 eine Platte 51 befestigt, die mittels des Kugellagers 52, welches in einer Ausnehmung der Platte 51 eingelegt ist, auf der Zapfwelle 5 gelagert ist. Um die Platte 51 an dem Gehäuse 1 des Zapfwellengetriebes zu befestigen, genügen dem Kugellager 52 bereits ein oder zwei Schrauben 2. Auf den verzahnten Teil 53 der Zapfwelle 5 ist das Kupplungsteil 7 aufgesetzt, welches drei Mitnehmerfinger 9 aufweist. Dieses Kupplungsteil 7 ist auf der Verzahnung 53 der Zapfwelle 5 axial verschiebbar, aber durch seine Innenverzahnung 54, die in die Verzahnung 53 der Zapfwelle 5 eingreift, drehfest gelagert. Gegen ein Herunterfallen von der Zapfwelle 5 ist dieses Kupplungsteil 7 durch einen federnden Sicherungsring 40 geschützt, der in eine Nut an dem Ende der Zapfwelle 5 eingesetzt ist. Dieses Kupplungsteil 7 weist auf der dem Schlepper zugewandten Seite einen zylindrischen Teil 39 auf, der zur Führung einer Feder 41 dient, die sich einerseits gegen die dem Schlepper zugewandten Seite des Kuppelgliedes 7 abstützt, andererseits gegen einen Ring 42 abstützt, der sich seinerseits gegen den Fuss 50 der Zapfwelle 5 abstützt, welcher durch den Übergang des verzahnten Teiles 53 der Zapfwelle 5 auf den unverzahnten, einen grösseren Durchmesser aufweisenden Teil der Zapfwelle 5 gebildet ist. Diese Feder 41 ist ständig bestrebt, den Kupplungsteil 7 mit den Mitnehmerfingern 9 gegen den Sicherungsring 40 zu drücken.

Der andere Kupplungsteil 20 weist Mitnehmerklauen 21 auf und sitzt auf einer Welle 55, die in dem Lager 18 gelagert ist, welches in einer Ausnehmung des Schildes 17 eingesetzt ist. An der dem Schlepper abgewandten Seite der Welle 55 befindet sich ein Teil 56 des Wellengelenkes der zum Gerät führenden Welle. Daher kann das Wellenstück 55 bereits als ein Teil dieser zum Gerät führenden Welle angesehen werden. Am unteren Ende läuft das Schild 17 in eine Gabel 57 aus. Diese Gabel 57 fasst über die Stange 58, welche von Konsolen 59 getragen ist, die an der Platte 51 befestigt sind. Diese Gabel 57 ist durch das untere Ende des Schildes 17 und ein hieran angebrachtes muldenförmiges Bauteil gebildet. Zweckmässigerweise sind die Seitenflächen 60 der Gabel 57 so ausgeführt, dass sie sich nach unten hin verjüngen, indem sie schräg nach unten hin zulaufen. Entsprechend sind zweckmässigerweise die der Gabel 57 zugekehrten Seiten der Konsolen 59 ebenfalls schräg ausgeführt und erweitern sich nach oben hin, wobei es zweckmässig ist, wenn die Neigungswinkel dieser beiden Schrägen gleich sind. Dieses erleichtert das Einsetzen des Schildes 17 mit dem Kupplungsteil 20. Gleichzeitig dient dieses der Zentrierung des Schildes 17. Am oberen Ende weist das Schild 17 einen Handgriff 27 auf, der in diesem Ausführungsbeispiel senkrecht zur Ebene des Schildes 17 verläuft. Unterhalb des Handgriffes 27 befindet sich eine Ausnehmung 61, durch die ein Handgriff 62 hindurchtritt, der einstückig mit dem Haken 63 hergestellt ist und einen zweiarmigen Hebel mit dem Haken 63 bildet, der auf dem Zapfen 64 gelagert ist. Der Haken 63 greift hinter ein Widerlager 65, welches an der Platte 51 befestigt ist. Mit diesem Haken 63 wird das Schild 17 an seinem oberen Ende befestigt. Eine Feder 66 trägt dafür Sorge, dass der Haken 63 in seiner Schliessstellung hinter dem Widerlager 65 gehalten wird. Der Zapfen 64 ist mittels nicht sichtbarer Konsolen an dem Schild 17 verschwenkbar gelagert. Die Ausnehmung 61 bildet mit ihrer oberen und unteren Begrenzung gleichzeitig eine Begrenzung der Bewegungsmöglichkeit des Handgriffes 62 und damit auch des Hakens 63. Die Mitnehmerklauen 21 des Kupplungsgliedes 20 weisen eine im wesentlichen radial verlaufende Fläche 22 auf, welche sich gegen die Mitnehmerfläche 10 des Mitnehmerfingers 9 des Kupplungsgliedes 7 legt. Zur Zentrierung dient eine Kugelkalottenfläche 11, die aus der Mitnehmerfläche 10 herausragt und die in eine kugelkalottenförmige Ausnehmung 23 eingreift, die in Fig. 3 gestrichelt angedeutet ist. Diese Kugelkalottenfläche 23 ist in der Ansicht der Fig. 3 nicht sichtbar, die gestrichelte Linie deutet lediglich an, wo sich diese Ausnehmung befindet. Mit Hilfe der Kugelkalottenfläche 11 und der kugelkalottenförmigen Ausnehmung 23 werden die beiden Kupplungsglieder 7, 20 miteinander zentriert. Die einzelnen Mitnehmerklauen 21 weisen auf der der Mitnahmefläche 22 abgewandten Seite eine kurvenförmige Übergangsfläche 67 zwischen den axial am weitesten auskragenden Flächen 68 und der Grundfläche 69 des Kupplungsgliedes 20 auf. Diese schräg verlaufende Übergangsfläche 67 gestattet es der Rückseite jedes Mitnehmerfingers 10 auf dieser Fläche 67 zu gleiten, wenn einmal beim Herabsetzen der Drehzahl der Zapfwelle 5 die Gerätewelle 55 mit höherer Drehzahl als die Zapfwelle 5 läuft. In diesem Falle bilden die Kupplungsteile 7, 20 einen Freilauf, weil die Mitnehmerfinger 9 mit ihrer Rückseite auf den Schrägflächen 67 gleiten und dabei das Kupplungsglied 7 axial entgegen der Kraft der Feder 41 in Richtung auf den Schlepper längs des gezahnten Teiles 53 der Zapfwelle 5 verschoben wird. Zur Erleichterung dieser Verschiebung sind an dem Kupplungsteil 20 weitere Schrägflächen 69 angeordnet, welche von den Schrägflächen 67 nach innen zu in Richtung auf die Fläche 69 verlaufen. An den Mitnehmerfingern 9 des Kupplungsteiles 7 sind ebenfalls weitere Schrägflächen 70 angebracht, die im wesentlichen parallel zu den Schrägflächen 69 verlaufen und ein besonders günstiges Gleiten der Flächen 70 auf den Flächen 69 und damit ein besonders gutes Gleiten der Mitnehmerfinger 9 auf der Rückseite der Klauen 21 gewährleisten. Neben dieser Freilaufeigenschaft ist aber gleichzeitig auch erreicht, dass beim Einkuppeln, wenn das Schild 17 auf die Stange 58 gesetzt ist und gegen das Kupplungsteil 7 verschwenkt wird, die Kupplungsteile 7 und 20 sich von selbst so ausrichten, dass sie ineinandergreifen, weil die Flächen 69, 70 aufeinander während des Einkuppelvorganges gleiten.

In dem in Fig. 12 dargestellten Ausführungsbeispiel ist ein Rahmen, der die Teile der Kupplung, nämlich die Platte 51 und das Schild 17 und damit die Kupplungsteile 7, 20 umgibt, nicht dargestellt. Dieser Rahmen kann entweder an der Platte 51 angebracht sein oder am Gehäuse des Zapfwellengetriebes oder am Schlepper selbst, er kann aber auch durch die Platte 51 ersetzt sein.

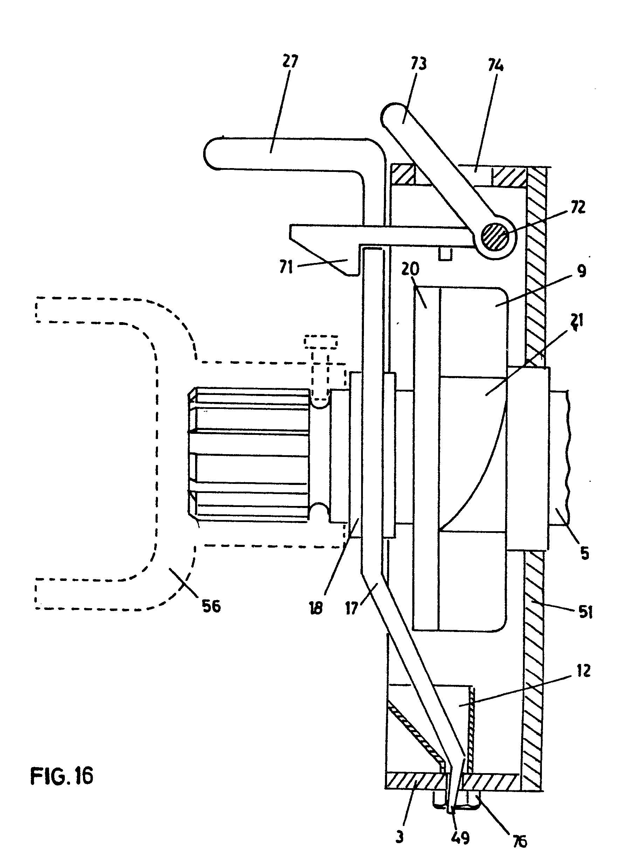

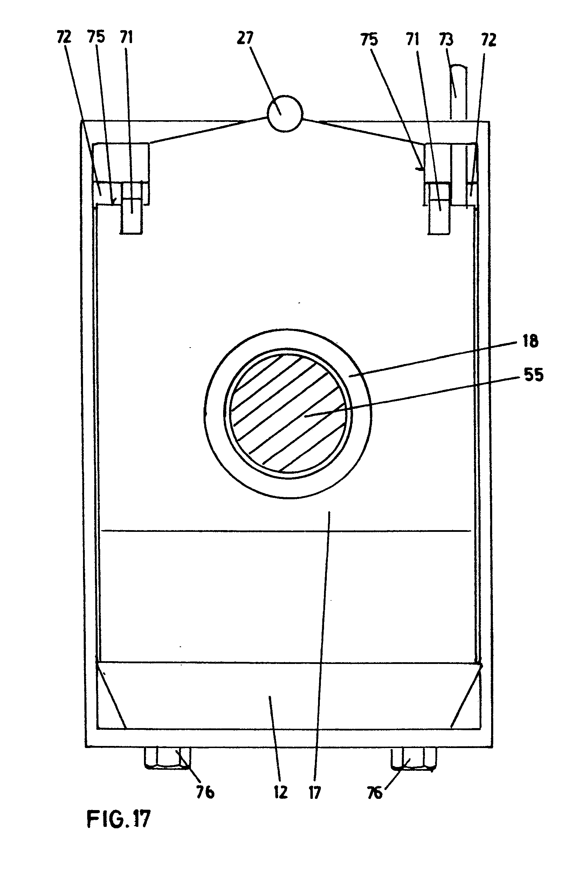

In den Fig. 16 und 17 ist ein weiteres Ausführungsbeispiel dargestellt.

In der Ausführungsform der Fig. 16 und 17 sind gleiche Teile wie in den vorhergehenden Figuren mit gleichen Bezugzeichen versehen. Hier ist ein Rahmen 3 anstelle oder als Zusatz zur Platte 51 vorgesehen. Dieser Rahmen 3 wird zweckmässigerweise auf der Platte 51 befestigt, er kann aber auch direkt am Zapfwellengetriebe des Schleppers oder am Schlepper selbst befestigt sein. Wesentlich anders ist hier die Anordnung der Haken 71, die fest auf einer Welle 72 gelagert sind, auf der zusätzlich ein Handgriff 73 befestigt ist, der sich durch eine Ausnehmung 74 im Rahmen 3 erstreckt. Die Welle 72 ist beidseitig im Rahmen 3 gelagert und steht unter der Kraft einer Feder, die nicht in der Zeichnung ersichtlich ist. Die Haken 71 greifen hinter das Schild 17, und zwar am Ort von Ausnehmungen 75 auf beiden Seiten des Schildes 17. Dieses Schild 17 ist mit einem unteren Ende in einen Trichter 12 hineingestellt und es sind im Boden des Rahmens 3 Ausnehmungen vorgesehen, durch die sich am unteren Ende des Schildes befindliche Zapfen 49 erstrecken. Einstellschrauben 76 dienen der Höhenjustierung des Schildes 17.

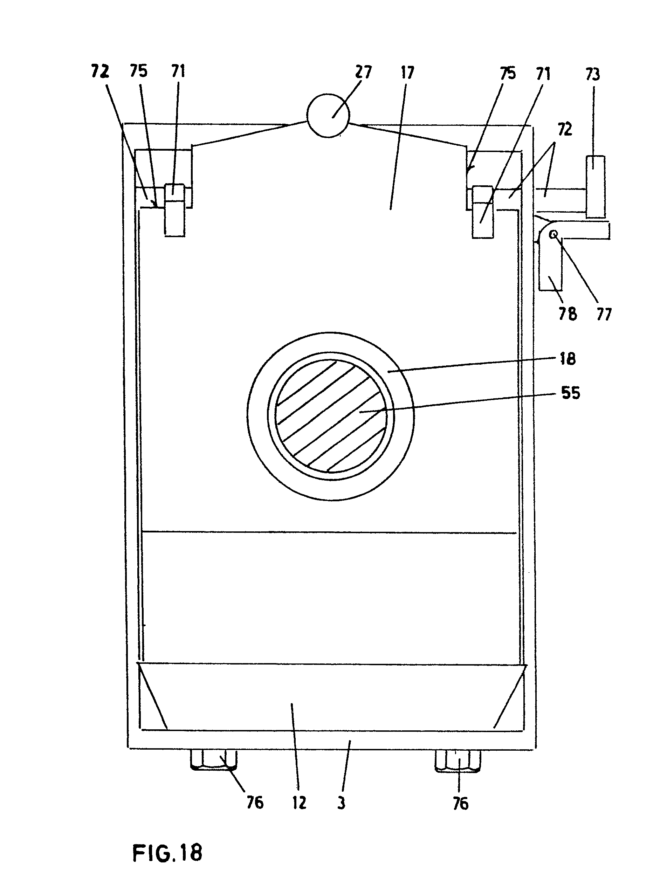

Eine weitere Ausführungsform ist in Fig. 18 dargestellt:

In der Ausführungsform der Fig. 18 erstreckt sich die Welle 72 durch den Rahmen hindurch und hier ist der Handhebel 73, der mit der Welle 72 fest verbunden ist, ausserhalb des Gehäuses angeordnet. Zusätzlich ist hier als Anschlag für den Handhebel 73 ein um den Zapfen 77 verschwenkbarer Winkel 78 vorgesehen. Normalerweise stützt sich der nach unten weisende Schenkel des Winkels 78 gegen den Rahmen 3 ab, so dass der seitlich nach aussen wegweisende Schenkel des Winkels 78 als Anschlag für den Handhebel 73 dient. In dieser Anschlagstellung nehmen die Haken 71 die in Fig. 16 gezeigte Stellung ein. Will man die Haken 71 ganz nach unten klappen, um beispielsweise Reparaturarbeiten oder Montagearbeiten vornehmen zu können, dann wird der Handhebel 73 zuerst nach oben geschwenkt, anschliessend wird der Winkel um den Zapfen 77, der über Konsolen am Rahmen 3 befestigt ist, mit seinem zur Seite hinweisenden Schenkel nach oben geklappt und dann wird der Handhebel 73 heruntergeklappt. Dieser Handhebel 73 kann sich dann nicht mehr auf den in Fig. 17 zur Seite hinweisenden Schenkel abstützen, sondern fällt ebenfalls wie die beiden Haken 71 nach unten.

**Patentansprüche**

1. Zapfwellenkupplung zur Verbindung der Antriebswelle (25) eines Geräts mit der Zapfwelle (5) eines Motorfahrzeugs, insbesondere eines landwirtschaftlichen Schleppers, bestehend aus zwei ineinandergreifenden Kupplungsgliedern (7, 8; 20), von denen das eine (7, 8) am Ende der Zapfwelle (5) in einem ein Zapfwellenlager (52) enthaltenden rahmen- oder plattenförmigen, mit dem Zugfahrzeug verbundenen Gehäuseteil (3, 51) angeordnet ist und das andere (20) am Ende der das Gerät antreibenden Welle (55), auf der zum Motorfahrzeug hin gerichteten Seite eines ein Wellenlager (18) enthaltenden, plattenförmigen Schildes (17) angeordnet ist, wobei der rahmen- oder plattenförmige Gehäuseteil (3, 51) und das Schild (17) in den gegenseitigen Eingriff bringbare Befestigungs- und/oder Zentriermittel aufweisen, welche Befestigungsmittel mindestens einen oberhalb der Welle (55) und der Zapfwelle (5) liegenden schwenkbaren Haken (63) umfassen, dadurch gekennzeichnet, dass das Schild (17) am oberen Ende mit einem Handgriff (27) versehen ist, dass an den unteren Enden des Schildes (17) und des rahmen- oder plattenförmigen Gehäuseteils (3, 51) Zentrier- und Befestigungsmittel (29, 49, 57) angeordnet sind, die durch eine vertikale Bewegungskomponente miteinander in Eingriff bringbar sind und die im Eingriff miteinander ein Schwenklager bilden, um den das Schild (17) mit dem anderen Kupplungsteil (20) zwischen einer ausgekuppelten Stellung, in der der/die schwenkbaren Haken (63) ausser Eingriff stehen, und einer eingekuppelten Stellung, in der der/die schwenkbaren Haken (63) in Eingriff stehen, schwenkbar ist, dass das eine Kupplungsglied (7, 8) ein mit radial vorstehenden Mitnehmerfingern (9) versehenes Rad und das andere Kupplungsglied (20) ein mit achsparallel angeordneten, über die Stirnseite vorstehenden Mitnehmerklauen (21) versehenes Rad ist, und dass die rückwärtigen Flächen der radialen Mitnehmerfinger (9) des einen Kupplungsgliedes (7) und ebenfalls die rückwärtigen Flächen der Mitnehmerklauen (21) des anderen Kupplungsgliedes (20) mit schrägen Anlaufflächen (67, 69, 70) versehen sind.

2. Zapfwellenkupplung nach Anspruch 1, dadurch gekennzeichnet, dass die Befestigungsvorrichtungen für das Schild (17) aus einem unter der Zapfwelle (5) angeordneten Trichter (12) oder einer Gabel (57) oder Klaue oder Stange (58) und mindestens einem über der Zapfwelle (5) angeordneten, entgegen der Kraft einer Feder (14) verschwenkbaren Haken (13) mit Anlaufschräge (16) besteht.

3. Zapfwellenkupplung nach Anspruch 1, dadurch gekennzeichnet, dass aus den Mitnehmerflächen (10) der Mitnehmerfinger (9) Kugelflächen oder kegelförmige Flächen (11) heraustehen und dass in derjenigen Seite (22) der Mitnehmerklauen (21), an denen die Mitnehmerflächen (10) anliegen, entsprechend negativ geformte Ausnehmungen eingearbeitet bzw. eingeformt sind.

4. Zapfwellenkupplung nach Anspruch 1, dadurch gekennzeichnet, dass die beiden Kupplungsteile eine Freilaufkupplung bilden, indem das eine Kupplungsglied (7) gegenüber dem anderen Kupplungsglied (20) axial entgegen der Kraft einer Feder (41) verschiebbar ist.

5. Zapfwellenkupplung nach Anspruch 1, dadurch gekennzeichnet, dass das Schild (17) aus einer am unteren Ende zweimal gekröpften Platte besteht.

6. Zapfwellenkupplung nach Anspruch 1, dadurch gekennzeichnet, dass das Schild (17) am unteren Ende zwei Zentrierzapfen oder einen Zentrierdorn (29) und der kastenförmige Rahmen Zentrierlöcher für die Aufnahme der Zentrierzapfen oder des Zentrierdornes (29) aufweist.

7. Zapfwellenkupplung nach Anspruch 2, dadurch gekennzeichnet, dass der Haken (13) einen nach oben oder nach der Seite hin durch den Rahmen geführten Handgriff (33) aufweist.

8. Zapfwellenkupplung nach Anspruch 1, dadurch gekennzeichnet, dass das eine Kupplungsglied (7) auf das Ende der Zapfwelle (5) aufgesetzt und das andere, im Schild (17) drehbar gelagerte Kupplungsglied (20) mit einem Wellenzapfen (19) in der Form eines Zapfwellenendes versehen ist.

9. Zapfwellenkupplung nach Anspruch 1, dadurch gekennzeichnet, dass der kastenförmige Rahmen (3) durch mindestens eine verschiebbare Wand abschliessbar ist.

10. Zapfwellenkupplung nach Anspruch 1, dadurch gekennzeichnet, dass die Befestigungsvorrichtung für das Schild (17) mit dem in ihm drehbar gelagerten Kupplungsteil (20) mindestens ein am Schild (17) verschwenkbar gelagerter Haken (63) ist, der hinter ein am Schlepper befindliches festes Widerlager (65) greift, wobei dieser Haken (63) vorzugsweise an seinem rückwärtigen Ende mit einem Handgriff (62) versehen ist, und wobei dieser Haken (63) und der Handgriff (62) vorzugsweise einen zweiarmigen Hebel bilden.

11. Zapfwellenkupplung nach Anspruch 10, dadurch gekennzeichnet, dass der Hebel (62, 63) mit der Kraft einer Feder (6) beaufschlagt ist und im Verschwenkbereich des Hebels (62, 63) oder seines Handgriffes (62) mindestens ein Anschlag vorgesehen ist.

12. Zapfwellenkupplung nach Anspruch 10, dadurch gekennzeichnet, dass der Handgriff (62) des Hebels (63) und ein am Schild befestigter Traggriff (27) einen solchen Abstand voneinander aufweisen, dass sie von einer Hand umfasst werden können.

13. Zapfwellenkupplung nach Anspruch 1, dadurch gekennzeichnet, dass das Schild (17) in seinem unteren Ende in eine gabelförmige Klaue (57) ausläuft, die über eine am Schlepper befestigte Stange (58) greift und die sich durch Schrägflächen (60) an den Seiten nach unten zu verjüngt.

14. Zapfwellenkupplung nach Anspruch 10, dadurch gekennzeichnet, dass die Platte (51) an ihrem oberen Ende entweder mindestens einen verschwenkbaren Haken (71), der am Schild (17) angreift, oder mindestens ein Widerlager (65) für einen am Schild (17) verschwenkbar gelagerten Haken (63) trägt und dass die Platte (51) an ihrem unteren Ende einen Trichter (12) oder Träger (59) für die Stange (58) für das Befestigen des Schildes (12) trägt.

## Revendications

1. Accouplement pour prise de force prévu pour relier l'arbre d'entraînement (25) d'une machine à l'arbre de prise de force (5) d'un véhicule à moteur, en particulier d'un tracteur agricole, composé de deux éléments d'accouplement (7, 8; 20) s'engageant l'un dans l'autre, dont l'un (7, 8) est disposé à l'extrémité de l'arbre de prise de force (5), dans un carter (3, 51) en forme de châssis ou de plaque, comportant un palier (52) de prise de force et assemblé au véhicule tracteur, tandis que l'autre (20) est disposé à l'extrémité de l'arbre (55) entraînant la machine, sur le côté tourné vers le véhicule d'un bouclier (17) en forme de plaque qui contient le palier (18) de l'arbre, le bouclier (17) et le carter (3, 51) en forme de châssis ou de plaque présentant des moyens de fixation et/ou de centrage pouvant être amenés en engagement réciproque, moyens de fixation qui comprennent au moins un crochet pivotant (63) situé au-dessus de l'arbre (55) et de l'arbre de prise de force (5), caractérisé par le fait que l'extrémité supérieure du bouclier (17) comporte une poignée (27), qu'à l'extrémité inférieure du bouclier (17) et du carter (3, 51) sont disposés des moyens de fixation et de centrage (29, 49, 57) qui, grâce à une composante verticale de mouvement, peuvent être amenés en engagement réciproque, et qui constituent en engagement réciproque un palier pivotant autour duquel le bouclier (17) muni de l'autre élément d'accouplement (20) peut pivoter entre une position désaccouplée, dans laquelle le ou les crochets pivotants (63) ne se trouvent pas en engagement, et une position accouplée dans laquelle le ou les crochets pivotants (63) sont en engagement, que l'un (7, 8) des éléments d'accouplement est une roue dotée de doigts entraîneurs (9) faisant saillie dans le sens radial et l'autre élément d'accouplement (20) une roue dotée de griffes d'entraînement (21) dépassant de sa face frontale et disposées sur des axes parallèles, et que les faces arrière des doigts entraîneurs (9) radiaux de l'un (7) des éléments d'accouplement, de même que les faces arrières des griffes d'entraînement (21) de l'autre élément d'accouplement (20), sont pourvues de surfaces d'attaque inclinées (67, 69, 70).

2. Accouplement pour prise de force selon la revendication 1, caractérisé par le fait que les dispositifs de fixation du bouclier (17) sont constitués par un entonnoir (12) disposé sous l'arbre de prise de force (5) ou par une fourche (57) ou une griffe ou une tige (58), ainsi que par au moins un crochet (13) à surface d'attaque inclinée (16), qui peut pivoter à l'encontre de la force d'un ressort (14) et qui est disposé au-dessus de l'arbre de prise de force (5).

3. Accouplement pour prise de force selon la revendication 1, caractérisé par le fait que des surfaces coniques ou sphériques (11) dépassent des faces d'entraînement (10) des doigts entraîneurs (9), et que des évidements de forme correspondante sont usinés ou formés sur le côté (22) des griffes d'entraînement (21) contre lequel s'appuient les faces d'entraînement (10).

4. Accouplement pour prise de force selon la revendication 1, caractérisé par le fait que les deux éléments d'accouplement constituent un accouplement à roue libre, l'un (7) des éléments d'accouplement pouvant être déplacé axialement par rapport à l'autre élément d'accouplement (20) à l'encontre de la force d'un ressort (41).

5. Accouplement pour prise de force selon la revendication 1, caractérisé par le fait que le bouclier (17) est composé d'une plaque coudée à deux reprises en son extrémité inférieure.

6. Accouplement pour prise de force selon la revendication 1, caractérisé par le fait que le bouclier (17) présente à son extrémité inférieure deux tourillons de centrage ou un ergot de centrage (29), et que le châssis en forme de boîtier présente des trous de centrage destinés à recevoir les tourillons de centrage ou l'ergot de centrage (29).

7. Accouplement pour prise de force selon la revendication 2, caractérisé par le fait que le crochet (13) comporte une poignée (33) qui s'étend vers le haut ou vers le côté à travers le châssis.

8. Accouplement pour prise de force selon la revendication 1, caractérisé par le fait que l'un (7) des éléments d'accouplement est monté sur l'extrémité de l'arbre de prise de force (5), tandis que l'autre élément d'accouplement (20), monté en rotation sur le bouclier (17), est pourvu d'un tourillon (19) qui présente la forme d'un bout d'arbre de prise de force.

9. Accouplement pour prise de force selon la revendication 1, caractérisé par le fait que la châssis (3) en forme de boîtier peut être fermé par au moins une paroi coulissante.

10. Accouplement pour prise de force selon la revendication 1, caractérisé par le fait que le dispositif de fixation du bouclier (17) – bouclier qui est muni de l'élément d'accouplement (20) monté en rotation sur celui-ci – comprend au moins un crochet (63) pivotant, qui s'accroche par l'arrière sur une butée fixe (65) solidaire du tracteur, le crochet (63) étant de préférence équipé sur son extrémité arrière d'une poignée (62), et le crochet (63) et la poignée (62) formant de préférence un levier à deux bras.

11. Accouplement pour prise de force selon la revendication 10, caractérisé par le fait que le levier (62, 63) est actionné par la force d'un ressort (66), et qu'au moins une butée est prévue dans la zone de pivotement du levier (62, 63) ou de sa poignée (62).

12. Accouplement pour prise de force selon la revendication 10, caractérisé par le fait que la poignée (62) du levier (63) et une anse (27) solidaire du bouclier sont à une distance mutuelle telle qu'elles peuvent être saisies d'une seule main.

13. Accouplement pour prise de force selon la revendication 1, caractérisé par le fait que le bouclier (17) se termine à son extrémité inférieure en une griffe (57) fourchue qui s'accroche par le dessus à une tige (58) fixée sur le tracteur et qui se rétrécit vers le bas, par la présence sur les côtés de surface inclinées (60).

14. Accouplement pour prise de force selon la revendication 10, caractérisé par le fait que la plaque (51) porte à son extrémité supérieure, soit au moins un crochet pivotant (71) s'accrochant sur le bouclier (17), soit au moins une butée (65) pour un crochet (63) monté en pivotement sur le bouclier (17), et que la plaque (51) porte à son extrémité inférieure un entonnoir (12) ou un support (59) pour la tige (58) destinée à la fixation du bouclier (17).

**Claims**

1. A take-off shaft coupling for connecting the driving shaft (25) of a device to the take-off shaft (5) of a motor vehicle, in particular of an agricultural tractor, said coupling consisting of two interlocking coupling elements (7, 8; 20), one of which (7, 8) is arranged at the end of the take-off shaft (5) in a frame-shaped or plate-shaped housing member (3, 51) which contains a take-off shaft bearing (52) and is connected to the tractor, and the other (20) is arranged at the end of the shaft (55) driving the device, on the side facing the motor vehicle of a plate-shaped shield (17) having a shaft bearing (18), the frame-shaped or plate-shaped housing member (3, 51) and the shield (17) having fastening and/or centering means which can be brought into engagement and which comprise at least one pivotable hook (63) which is positioned above the shaft (55) and the take-off shaft (5), characterised in that at its upper end, the shield (17) is provided with a handle (27); that at the lower ends of the shield (17) and of the frame-shaped or plate-shaped housing member (3, 51) centering and fastening means (29, 49, 57) are arranged, which can be brought into mutual engagement by means of a vertical movement component and which when engaged with one another form a pivot bearing about which the shield (17) can be pivoted by means of the other coupling component (20) between an uncoupled position in which the pivotable hook(s) (63) are not engaged, and a coupled position, in which the pivotable hook(s) (63) are engaged; that the one coupling element (7, 8) is a wheel which is provided with radially-protruding driving fingers (9) and the other coupling element (20) is s wheel which is provided with driving claws (21) which are arranged so as to be parallel to the axis and to protrude beyond the end face; and that the rear surfaces of the radial driving fingers (9) of the one coupling element (7) and similarly the rear surfaces of the driving claws (21) of the other coupling element (20) are provided with inclined catch surfaces (67, 69, 70).

2. A take-off shaft coupling as claimed in Claim 1, characterised in that the fastening means for the shield (17) consists of a horn (12) which is arranged below the take-off shaft (5), or of a fork (57), or a claw or rod (58) and at least one hook (13) which has a catch slope (16) and is arranged above the take-off shaft (5) and pivotable against the force of a spring (14).

3. A take-off shaft coupling as claimed in Claim 1, characterised in that spherical or cone-shaped surfaces (11) protrude from the driving surfaces (10) of the driving fingers (9); and that recesses of correspondingly negative form, are worked or shaped into that side (22) of the driving claws (21), against which the driving surfaces (10) abut.

4. A take-off shaft coupling as claimed in Claim 1, characterised in that the two coupling components form a slip coupling; and in that relative to the other coupling element (20), the one coupling element (7) is axially displaceable against the force of a spring (14).

5. A take-off shaft coupling as claimed in Claim 1, characterised in that the shield (17) consists of a plate which is bent at right angles twice at its lower end.

6. A take-off shaft coupling as claimed in Claim 1, characterised in that shield (17) has two centering pins or one centering plug (29) at its lower end and the box-shaped frame has centering openings to accommodate the centering pins or the centering plug (29).

7. A take-off shaft coupling as claimed in Claim 2, characterised in that the hook (13) has a handle (33) which is led through the frame upwards or sideways.

8. A take-off shaft coupling as claimed in Claim 1, characterised in that the one coupling element (7) is positioned on the end of the take-off shaft (5) and the other coupling element (20) which is rotatably positioned in the shield (17), is provided with a shaft plug (19) in the form of a take-off shaft end.

9. A take-off shaft coupling as claimed in Claim 1, characterised in that the box-shaped frame (3) can be closed off by at least one displaceable wall.

10. A take-off shaft coupling as claimed in Claim 1, characterised in that the fastening means for the shield (17), together with the coupling component (20) which is pivotably positioned therein, is at least one hook (63) which is pivotably positioned on the shield (17) and which grips behind a fixed abutment (65) which is arranged on the tractor, said hook (63) preferably being provided with a handle (62) at its rear end; and said hook (63) and the handle (62) preferably forming a two-armed lever.

11. A take-off shaft coupling as claimed in Claim 10, characterised in that the lever (62, 63) is acted upon by the force of a spring (6); and that at least one stop is arranged in the pivoting range of the lever (62, 63), or its handle (62).

12. A take-off shaft coupling as claimed in Claim 10, characterised in that the handle (62) of the lever (63) and a carrying handle (27) are spaced from one another by a distance such that they can be gripped by one hand.

13. A take-off shaft coupling as claimed in Claim 1, characterised in that, at its lower end, the shield (17) merges into a forked claw (57) which grips over a rod (58) secured to the tractor and which tapers downwardly by means of lateral sloped surfaces (60).

14. A take-off shaft coupling as claimed in Claim 10, characterised in that, at its upper end, the plate (51) supports either at least one pivotable hook (71) which engages with the shield (17), or at least one abutment (65) for a hook (63) which is pivotably positioned on the shield (17); and that at its lower end, the plate (51) supports a horn (12), or a carrier (59) for the rod (58), in order to secure the shield (12).

FIG.1

1 / 14

0 083 033

FIG.2

FIG. 3

FIG.4

**FIG.5**

**FIG.8**

**FIG.9**

FIG. 6

**FIG. 7**

**FIG. 10**

**FIG. 11**

FIG. 12

**FIG. 13**

**FIG. 14**

**FIG. 15**

27 61 62

18

55

17

59 60 57 60 58 59

FIG. 16

FIG.17

FIG.18